# EUROPEAN PATENT APPLICATION

(11) **EP 4 714 997 A1**
(43) Date of publication of application: **25.03.2026**
(21) Application number: 25203319.6
(22) Date of filing: 19.09.2025
(51) Int. Cl.: C08G 69/14, C08G 69/26, C09J 177/02, C09J 177/04, H01M 4/62

(54) **DRY BINDER, AND ELECTRODE AND RECHARGEABLE LITHIUM BATTERY INCLUDING THE SAME**

(30) Priority: 20.09.2024 KR 20240127704; 12.09.2025 KR 20250131033
(71) Applicant: SAMSUNG SDI CO., LTD., Yongin-si, Gyeonggi-do 17084 (KR)
(72) Inventor: Choi, Kyubuem, 17084 Yongin-si, Gyeonggi-do (KR); Jung, Kyunghwa, 17084 Yongin-si, Gyeonggi-do (KR)
(74) Representative: Meissner Bolte Partnerschaft mbB

(57) **Abstract**

A dry binder, an electrode for a rechargeable lithium battery including the dry binder, a rechargeable lithium battery including the electrode, and a method for manufacturing the electrode are disclosed. The dry binder may include a crosslinking reaction product in which a polyamide-based polymer is crosslinked by an epoxy crosslinking agent, wherein the epoxy crosslinking agent is a novolac epoxy crosslinking agent.

## Description

### BACKGROUND

### 1. Field

The present invention relates to a dry binder, an electrode including the dry binder, a rechargeable lithium battery including the electrode, and a method for manufacturing the electrode.

### 2. Description of the Related Art

With the rapid spread of electronic devices that utilize batteries, such as mobile phones and/or laptop computers, and electric vehicles, it is desirable to develop small, lightweight, and relatively high-capacity rechargeable batteries. For example, rechargeable lithium batteries are attracting attention as a power source for portable devices because they are lightweight and have high energy density.

Rechargeable lithium batteries include a positive electrode and a negative electrode including an active material capable of intercalating and deintercalating lithium ions, and an electrolyte solution, and electrical energy is produced through oxidation and reduction reactions if (e.g., when) lithium ions are intercalated and deintercalated from the positive electrode and the negative electrode.

Transition metal compounds, such as lithium cobalt-based oxide, lithium nickel-based oxide, and lithium manganese-based oxide are mainly or predominantly utilized as positive electrode active materials for rechargeable lithium batteries, and crystalline carbon materials, such as natural graphite and/or artificial graphite, or amorphous (e.g., non-crystalline) carbon materials are utilized as negative electrode active materials.

Binders are utilized in one or more suitable components of these rechargeable lithium batteries. The binder should have high adhesive strength, but binders having high adhesive strength generally have the disadvantage of increasing resistance (e.g., electrical resistance).

### SUMMARY

The present invention is directed toward a dry binder which has high adhesive strength, is environmentally friendly, and may be utilized in dry processes.

The present invention is further directed toward an electrode having excellent or suitable tensile strength and adhesive strength by including the dry binder.

The present invention is also directed toward a rechargeable lithium battery having excellent or suitable cycle-life characteristics by including the dry binder.

Additional aspects of embodiments will be set forth in part in the description which follows and, in part, will be apparent from the description or may be learned by practice of the presented embodiments of the disclosure.

The dry binder of the invention includes a crosslinking reaction product in which a polyamide-based polymer is crosslinked by an epoxy crosslinking agent, wherein the epoxy crosslinking agent is a novolac epoxy crosslinking agent.

The electrode of the invention for a rechargeable lithium battery includes the dry binder of the invention and an electrode active material.

The rechargeable lithium battery of the invention includes a positive electrode, a negative electrode, and an electrolyte, wherein at least one selected from the negative electrode and the positive electrode comprises the dry binder of the invention. In other words, the rechargeable lithium battery of the invention includes a positive electrode, a negative electrode, and an electrolyte, wherein at least one selected from the negative electrode and the positive electrode are an electrode of the invention.

The invention also concerns a method for manufacturing the electrode of the invention, wherein the method includes dry mixing an electrode active material, a binder, and a conductive (e.g., electrically conductive) agent (e.g., a conductive (e.g., electrically conductive) material) to prepare a composition to form or provide an electrode, and coating the composition to form or provide the electrode on an electrode current collector to form or provide an electrode, wherein the binder includes a crosslinking reaction product in which a polyamide-based polymer is crosslinked by an epoxy crosslinking agent, and the epoxy crosslinking agent is a novolac epoxy crosslinking agent.

The dry binder of the invention may be environmentally friendly because it does not utilize fluorine (or fluorine-based binders) in the dry electrode manufacturing process, and may improve or enhance tensile strength and adhesive strength. By including the dry binder of the invention, an electrode having excellent or suitable tensile strength and adhesive strength and a rechargeable lithium battery having excellent or suitable cycle-life characteristics may be provided.

### BRIEF DESCRIPTION OF THE DRAWINGS

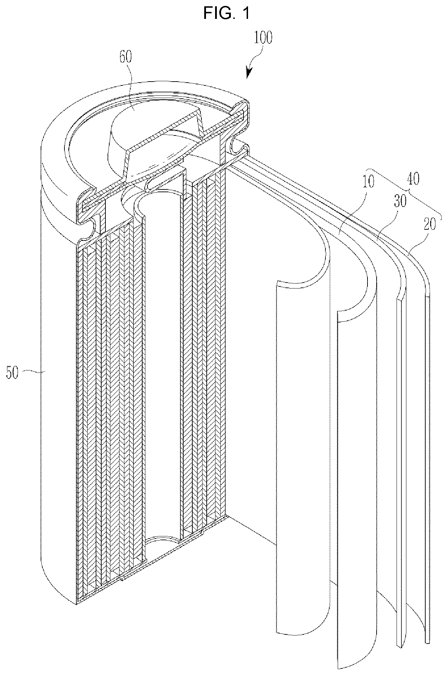

FIGS. 1-4 are views schematically illustrating a rechargeable lithium battery according to one or more embodiments.

### DETAILED DESCRIPTION

Hereinafter, embodiments of the present disclosure will be described in more detail so that those of ordinary skill in the art can easily implement them. However, the subject matter of the present disclosure may be embodied in one or more suitable forms and should not be construed as being limited to the embodiments set forth herein.

The terminology used herein is used to describe one or more embodiments only and is not intended to limit the scope of the present disclosure. The singular expression includes the plural expression unless the context clearly dictates otherwise.

The utilization of "may" if (e.g., when) describing embodiments of the present disclosure refers to "one or more embodiments of the present disclosure."

As utilized herein, the terms "substantially," "about," or similar terms are used as terms of approximation and not as terms of degree and are intended to account for the inherent deviations in measured or calculated values that would be recognized by those of ordinary skill in the art. "About" as used herein is inclusive of the stated value and refers to being within an acceptable range of deviation for the particular value as determined by one of ordinary skill in the art, considering the measurement in question and the error associated with measurement of the particular quantity (e.g., the limitations of the measurement system). For example, "about" may refer to being within one or more standard deviations, or within ±30%, ±20%, ±10%, or ±5% of the stated value.

In the context of the present application and unless otherwise defined, the terms "use," "using," and "used" may be considered synonymous with the terms "utilize," "utilizing," and "utilized," respectively.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, for example, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in the present disclosure is intended to include all higher numerical limitations subsumed therein. Accordingly, Applicant reserves the right to amend this specification, including the claims, to expressly recite any sub-range subsumed within the ranges expressly recited herein.

As used herein, "combination thereof" refers to a mixture, a laminate, a composite, a copolymer, an alloy, a blend, a reaction product, and/or the like of the constituents.

Herein, it should be understood that terms, such as "includes," "including," "have," or "having" are intended to designate the presence of an embodied feature, number, step, element, or a combination thereof, but it does not preclude the possibility of the presence or addition of one or more other features, number, step, element, or a combination thereof. For example, it should be understood that the term "comprise(s)/comprising," "include(s)/including," or "have/has/having" specifies the presence of stated features, integers, steps, operations, elements, and/or components, but do not preclude the presence or addition of one or more other features, integers, steps, operations, elements, components, and/or groups thereof. Also, the terms "comprise(s)/comprising," "include(s)/including," "have/has/having," or similar terms include or support the terms "consisting of" and "consisting essentially of," indicating the presence of stated features, integers, steps, operations, elements, and/or components, without or essentially without the presence of other features, integers, steps, operations, elements, components, and/or groups thereof.

In the accompanying drawings, the thickness of layers, films, panels, regions, and/or the like may be exaggerated for clarity, and like reference numerals designate like elements throughout the specification.

It will be understood that if (e.g., when) an element, such as a layer, a film, a region, or a substrate, is referred to as being "on" another element, it may be directly on the other element or intervening elements may also be present therebetween. In contrast, jf (e.g., when) an element is referred to as being "directly on" another element, there are no intervening elements present therebetween.

In one or more embodiments, the term "layer" herein includes not only a shape formed or provided on the whole surface if (e.g., when) viewed from a plan view, but also a shape formed or provided on a partial surface.

The average particle diameter may be measured by a method that is generally available to or generally used by those skilled in the art, for example, by a particle size analyzer and/or by a transmission electron microscope image and/or a scanning electron microscope image. In one or more embodiments, it may be feasible to obtain an average particle diameter value by conducting measurement that uses a dynamic light scattering method, performing data analysis, counting the number of particles for each particle size range, and calculating from this data. Unless otherwise defined, the average particle diameter may refer to the diameter (D₅₀) of particles having a cumulative volume of 50 volume% in the particle size distribution. As used herein, if (e.g., when) a definition is not otherwise provided, the average particle diameter refers to a diameter (D₅₀) of particles having a cumulative volume of 50 volume% in the particle size distribution that is obtained by measuring the size (e.g., diameter or major axis length) of about 20 particles at random in a scanning electron microscope image.

Herein, "or" is not to be construed as an exclusive meaning, for example, "A or B" is construed to include A, B, A+B, and/or the like.

Herein, "dry binder" refers to a binder that may be utilized to manufacture an electrode in a dry manner without using a solvent. For example, it refers to a binder used in a dry electrode in which an active material, a dry binder, and optionally a conductive (e.g., electrically conductive) material are mixed without a solvent to prepare an active material layer composition, and an electrode may be prepared utilizing the composition.

### Dry Binder

The dry binder of the invention includes a crosslinking reaction product in which a polyamide-based polymer is crosslinked by an epoxy crosslinking agent. The epoxy crosslinking agent is a novolac epoxy crosslinking agent.

The dry binder may serve to attach electrode active material particles well or suitably to each other and to attach the active material well or suitably to the current collector.

Research has been done on developing environmentally friendly and manufacturing-efficient dry electrode manufacturing processes. Fluorine-based binders, such as polytetrafluoroethylene (PTFE), are mainly or predominantly used as dry binders. However, due to environmental issues, attempts are being made to replace fluorine-based binders, such as PTFE, with more environmentally friendly materials.

As part of the need for such environmentally friendly materials, research is being conducted on binders that do not contain fluorine atoms. However, binders that do not contain fluorine atoms have poor adhesive properties and thus do not reach the level of PTFE.

Therefore, it is desired to develop a dry binder that has excellent or suitable adhesive properties and may improve or enhance battery performance as an alternative material to fluorine-based binders, such as PTFE.

Accordingly, in one or more embodiments, a dry binder capable of improving or enhancing the performance of a battery (e.g., a rechargeable lithium battery) is provided by introducing a binder having improved or enhanced adhesive properties, electrolyte solution stability, and current density, and/or the like into an electrode without containing fluorine atoms.

In one or more embodiments, the polyamide-based polymer may include a structural unit represented by Chemical Formula 1-1, a structural unit represented by Chemical Formula 1-2, or a combination thereof.

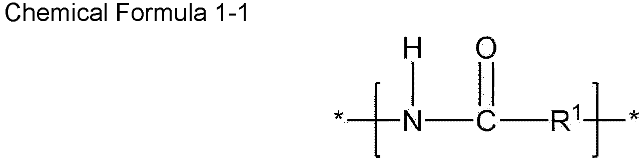

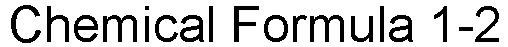

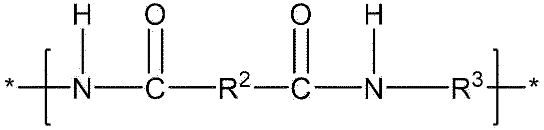

In Chemical Formulas 1-1 and 1-2,
R¹, R², and R³ are each independently a linking group that is a substituted or unsubstituted C2 to C20 alkylene group, a substituted or unsubstituted C3 to C20 cycloalkylene group, or a combination thereof, and * indicates a linking site with the main chain of the polyamide-based polymer (e.g., the backbone of the polyamide-based polymer).

The substituted or unsubstituted C2 to C20 alkylene group may include a structural unit of -(CH₂)ₙ- (n may be an integer of 2 to 14).

At least one non-adjacent methylene group (-(CH₂)-) selected from among the linking groups may be replaced with -NH-, -C(=O)-, or a combination thereof.

In one or more embodiments, R¹, R², and R³ may include any one selected from among the moieties in Group 1.

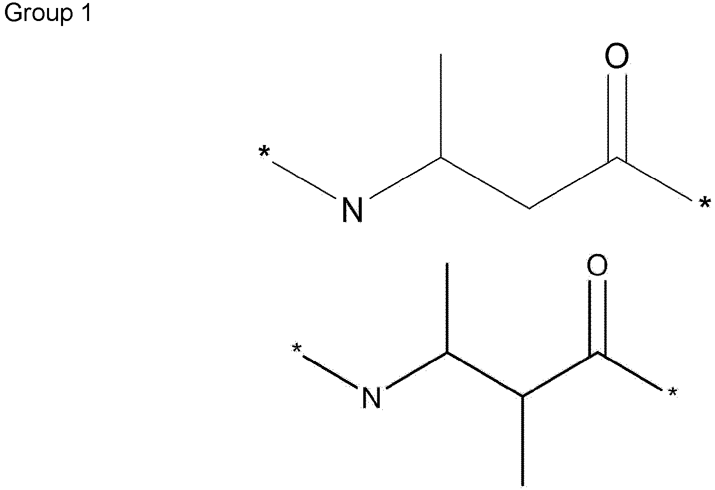

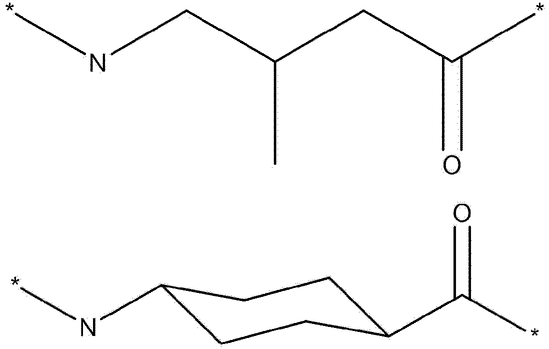

In Group 1, * indicates a linking site with the main chain of the polyamide-based polymer (e.g., the backbone of the polyamide-based polymer).

In one or more embodiments, the polyamide-based polymer may be included in an amount of about 60 parts by weight to about 95 parts by weight, for example, about 70 parts by weight to about 90 parts by weight, based on 100 parts by weight of the dry binder. Within the foregoing ranges, the electrode manufacturing process using a dry binder may be relatively easy and the adhesive strength of the electrode may be improved or enhanced.

A weight average molecular weight (*M*_{w}) of the polyamide-based polymer may be about 600 g/mol to about 800,000 g/mol. In the foregoing range, the electrode manufacturing process using a dry binder may be relatively easy and the adhesive strength of the electrode may be improved or enhanced.

In one or more embodiments, the polyamide-based polymer may include nylon 6, nylon 66, a copolymer of nylon 6 and nylon 66, nylon 12, nylon 610, and/or polymethacrylic acid diamifamide (MXD6). In one or more embodiments, the polyamide-based polymer may use only one type or kind of polyamide or may use two or more types or kinds of polyamide in combination.

The novolac epoxy crosslinking agent may include a structural unit of Chemical Formula 2.

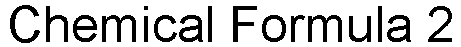

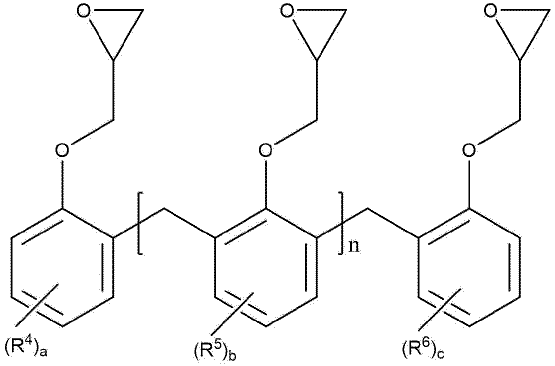

In Chemical Formula 2,
R⁴, R⁵, and R⁶ may be the same or different and may each independently be hydrogen (H) or a substituted or unsubstituted C1 to C6 alkyl group, for example, a substituted or unsubstituted methyl group, n may be 1 to 30, and a and c may each independently be an integer of 0 to 4 and b may be an integer of 0 to 3.

The novolac epoxy crosslinking agent may exist as a solid at room temperature, and if (e.g., when) mixed with a polyamide-based polymer that exists in a solid state, no coagulation may occur and the novolac epoxy crosslinking agent may be evenly (e.g., substantially evenly) dispersed in the polyamide-based polymer.

In one or more embodiments, the novolac epoxy crosslinking agent may be included in an amount of about 5 parts by weight to about 40 parts by weight, for example, about 10 parts by weight to about 30 parts by weight, based on 100 parts by weight of the dry binder. Within the foregoing ranges, the novolac epoxy crosslinking agent may form or provide a crosslinking bond with the polyamide-based polymer to produce an effect of improving or enhancing adhesive strength.

A weight average molecular weight (*M*_{w}) of the novolac epoxy crosslinking agent may be about 500 g/mol to about 10,000 g/mol. Within the foregoing range, the novolac epoxy crosslinking agent may form or provide a crosslinking bond with a polyamide-based polymer to improve or enhance adhesive strength.

In one or more embodiments, the novolac epoxy crosslinking agent may include a cresol novolac crosslinking agent, a phenol novolac crosslinking agent, a phenol-modified novolac epoxy crosslinking agent, and/or the like.

The dry binder may have the effect of improving or enhancing tensile strength and adhesive strength and may be usefully or suitably used as a binder included in a positive electrode and a negative electrode for rechargeable lithium batteries.

### Electrode

The present invention also provides an electrode for a rechargeable lithium battery including a dry binder of the invention and an electrode active material.

The electrode may be manufactured by providing an electrode composition for a rechargeable lithium battery including the dry binder and the electrode active material, as described in one or more embodiments, and coating the electrode composition on a current collector and compressing it. In one or more embodiments, the dry binder may be used in an amount of about 0.5 parts by weight to about 20 parts by weight based on 100 parts by weight of the electrode active material.

The electrode may be a negative electrode or a positive electrode. The binder may have high adhesive strength and low resistance (e.g., electrical resistance) even if (e.g., when) utilized in a negative electrode that undergoes a large volume change due to charge and discharge of a rechargeable lithium battery, and thus may contribute to improving or enhancing the performance of a rechargeable lithium battery.

Hereinafter, a positive electrode and a negative electrode for a rechargeable lithium battery according to one or more embodiments is described in more detail.

### Negative Electrode

The negative electrode may include a current collector and a negative electrode active material layer on the current collector. The negative electrode active material layer may include a negative electrode active material and may further include a binder and/or a conductive (e.g., electrically conductive) material. The binder may be a dry binder as described in one or more embodiments.

For example, the negative electrode active material layer may include about 90 wt% to about 99.5 wt% of the negative electrode active material, about 0.5 wt% to about 5 wt% of the binder, and about 0 wt% to about 5 wt% of the conductive (e.g., electrically conductive) material.

The negative electrode active material may include a material that reversibly intercalates/deintercalates lithium ions, a lithium metal, a lithium metal alloy, a material capable of doping/dedoping lithium, and/or transition metal oxide.

The material that reversibly intercalates/deintercalates lithium ions may include, for example, crystalline carbon, amorphous (e.g., non-crystalline) carbon, or a combination thereof as a carbon-based negative electrode active material. The crystalline carbon may be irregular or sheet (e.g., substantially sheet), flake (e.g., substantially flake), spherical (e.g., substantially spherical), or fiber (e.g., substantially fiber) shaped natural graphite and/or artificial graphite. The amorphous (e.g., non-crystalline) carbon may be a soft carbon, a hard carbon, a mesophase pitch carbonization product, calcined coke, and/or the like.

The lithium metal alloy may include an alloy of lithium and a metal selected from among sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminum (Al), and tin (Sn).

The material capable of doping/dedoping lithium may be a Si-based negative electrode active material and/or a Sn-based negative electrode active material. The Si-based negative electrode active material may include silicon, a silicon-carbon composite, SiOₓ (0 < x ≤ 2; e.g., SiO₂), a Si-Q alloy (wherein Q is an element selected from among an alkali metal, an alkaline-earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, SnOₖ (0 < k ≤ 2; e.g., SnO₂), a Sn-based alloy, or a combination thereof.

The silicon-carbon composite may be a composite of silicon and amorphous (e.g., non-crystalline) carbon. According to one or more embodiments, the silicon-carbon composite may be in the form of silicon particles and amorphous (e.g., non-crystalline) carbon coated on the surface of the silicon particles. For example, it may include a secondary particle (core) in which silicon primary particles are assembled and an amorphous (e.g., non-crystalline) carbon coating layer (shell) on the surface of the secondary particle. The amorphous (e.g., non-crystalline) carbon may also be present between the silicon primary particles, for example, the silicon primary particles may be coated with amorphous (e.g., non-crystalline) carbon. The secondary particles may exist dispersed in an amorphous (e.g., non-crystalline) carbon matrix.

The silicon-carbon composite may further include crystalline carbon. For example, the silicon-carbon composite may include a core including crystalline carbon and silicon particles and an amorphous (e.g., non-crystalline) carbon coating layer on the surface of the core.

The Si-based negative electrode active material and/or the Sn-based negative electrode active material may be mixed with the carbon-based negative electrode active material.

The binder may serve to well or suitably adhere the negative electrode active material particles to each other and also to adhere the negative electrode active material to the current collector. The binder may include an additional binder in addition to the dry binder according to one or more embodiments. Examples of the additional binder may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinyl pyrrolidone, polyurethane, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and/or the like, but embodiments of the present disclosure are not limited thereto.

The conductive (e.g., electrically conductive) material may be included to provide electrode conductivity (e.g., electrical conductivity), and any suitable electrically conductive material may be used as a conductive material unless it causes a chemical change. Examples of the conductive (e.g., electrically conductive) material may include a carbon-based material, such as natural graphite, artificial graphite, carbon black, acetylene black, Ketjen black, a carbon fiber, a carbon nanofiber, a carbon nanotube, and/or the like; a metal-based material of a metal powder and/or a metal fiber including copper, nickel, aluminum, silver, and/or the like; a conductive (e.g., electrically conductive) polymer, such as polyphenylene and/or a polyphenylene derivative; or a mixture thereof.

The negative electrode current collector may include one selected from among a copper foil, a nickel foil, a stainless steel foil, a titanium foil, a nickel foam, a copper foam, a polymer substrate coated with a conductive (e.g., electrically conductive) metal, and a combination thereof.

### Positive Electrode

The positive electrode may include a current collector and a positive electrode active material layer formed or provided on the current collector. The positive electrode active material layer may include a positive electrode active material and may further include a binder and/or a conductive (e.g., electrically conductive) material. The binder may be the dry binder as described in one or more embodiments.

A content (e.g., amount) of the positive electrode active material may be about 90 wt% to about 99.5 wt% or about 90 wt% to about 99.0 wt% based on 100 wt% of the positive electrode active material layer, and each content (e.g., amount) of the binder and the conductive (e.g., electrically conductive) material may be about 0.5 wt% to about 5 wt% based on 100 wt% of the positive electrode active material layer.

The positive electrode active material may be a compound (e.g., lithiated intercalation compound) capable of intercalating and deintercalating lithium. For example, one or more types or kinds of composite oxides of lithium and a metal selected from among cobalt, manganese, nickel, and combinations thereof may be used.

The composite oxide may be a lithium transition metal composite oxide, and examples may include a lithium nickel-based oxide, a lithium cobalt-based oxide, a lithium manganese-based oxide, a lithium iron phosphate-based compound, a cobalt-free lithium nickel-manganese-based oxide, or a combination thereof.

As an example, a compound represented by any one selected from among the following chemical formulas may be used: LiₐA_{1-b}X_{b}O_{2-c}D_{c} (0.90≤a≤1.8, 0≤b≤0.5, and 0≤c≤0.05); LiₐMn_{2-b}X_{b}O_{4-c}D_{c} (0.90≤a≤1.8, 0≤b≤0.5, and 0≤c≤0.05); LiₐNi_{1-b-c}Co_{b}X_{c}O_{2-α}D_{α} (0.90≤a≤1.8, 0≤b≤0.5, 0≤c≤0.5, and 0<α<2); LiₐNi_{1-b-c}Mn_{b}X_{c}O_{2-α}D_{α} (0.90≤a≤1.8, 0≤b≤0.5, 0≤c≤0.5, and 0<α<2); LiₐNi_{b}Co_{c}L¹_{d}GₑO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCoG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂G_{b}O₄ (0.90≤a≤1.8 and 0.001≤b≤0.1); LiₐMn_{1-g}G_{g}PO₄ (0.90≤a≤1.8 and 0≤g≤0.5); Li_{(3-f)}Fe₂(PO₄)₃ (0≤f≤2); and LiₐFePO₄ (0.90≤a≤1.8).

In the foregoing chemical formulas, A may be nickel (Ni), cobalt (Co), manganese (Mn), or a combination thereof; X may be aluminum (Al), Ni, Co, Mn, chromium (Cr), iron (Fe), magnesium (Mg), strontium (Sr), vanadium (V), a rare earth element, or a combination thereof; D may be oxygen (O), fluorine (F), sulfur (S), phosphorus (P), or a combination thereof; G may be Al, Cr, Mn, Fe, Mg, lanthanum (La), cerium (Ce), Sr, V, or a combination thereof; and L¹ may be Mn, Al, or a combination thereof.

The positive electrode active material may be, for example, a lithium nickel-based oxide represented by Chemical Formula 11, a lithium cobalt-based oxide represented by Chemical Formula 12, a lithium iron phosphate-based compound represented by Chemical Formula 13, a cobalt-free lithium nickel-manganese-based oxide represented by Chemical Formula 14, or a combination thereof.

Chemical Formula 11 Liₐ₁Niₓ₁M¹_{y1}M²_{z1}O_{2-b1}X_{b1}

In Chemical Formula 11, 0.9≤a1≤1.8, 0.3≤x1≤1, 0≤y1≤0.7, 0≤z1≤0.7, 0.9≤x1+y1+z1≤1.1, and 0≤b1≤0.1, M¹ and M² may each independently be one or more selected from among Al, boron (B), Ba, Ca, Ce, Co, Cr, copper (Cu), Fe, Mg, Mn, molybdenum (Mo), niobium (Nb), Si, Sn, Sr, Ti, V, tungsten (W), and zirconium (Zr), and X may be one or more selected from among F, P, and S.

In Chemical Formula 11, 0.6≤x1≤1, 0≤y1≤0.4, and 0≤z1≤0.4, or 0.8≤x1≤1, 0≤y1≤0.2, and 0≤z1≤0.2.

Chemical Formula 12 Liₐ₂Coₓ₂M³_{y2}O_{2-b2}X_{b2}

In Chemical Formula 12, 0.9≤a2≤1.8, 0.7≤x2≤1, 0≤y2≤0.3, 0.9≤x2+y2≤1.1, and 0≤b2≤0.1, M³ may be one or more selected from among Al, B, Ba, Ca, Ce, Cr, Cu, Fe, Mg, Mn, Mo, Ni, selenium (Se), Si, Sn, Sr, Ti, V, W, yttrium (Y), Zn, and Zr, and X may be one or more selected from among F, P, and S.

Chemical Formula 13 Liₐ₃Feₓ₃M⁴_{y3}PO_{4-b3}X_{b3}

In Chemical Formula 13, 0.9≤a3≤1.8, 0.6≤x3≤1, 0≤y3≤0.4, and 0≤b3≤0.1, M⁴ may be one or more selected from among Al, B, Ba, Ca, Ce, Co, Cr, Cu, Mg, Mn, Mo, Ni, Se, Si, Sn, Sr, Ti, V, W, Y, Zn, and Zr, and X may be one or more selected from among F, P, and S.

Chemical Formula 14 Liₐ₄Niₓ₄Mn_{y4}M⁵_{z4}O_{2**-**b4}X_{b4}

In Chemical Formula 14, 0.9≤a4≤1.8, 0.8≤x4<1, 0<y4≤0.2, 0≤z4≤0.2, 0.9≤x4+y4+z4≤1.1, and 0≤b4≤0.1, M⁵ may be one or more element selected from among Al, B, Ba, Ca, Ce, Cr, Fe, Mg, Mo, Nb, Si, Sn, Sr, Ti, V, W, and Zr, and X may be one or more selected from among F, P, and S.

For example, the positive electrode active material may be a high-nickel positive electrode active material in which the nickel content (e.g., amount) is greater than or equal to about 80 mol%, greater than or equal to about 85 mol%, greater than or equal to about 90 mol%, greater than or equal to about 91 mol%, or greater than or equal to about 94 mol% and less than or equal to about 99 mol%, based on 100 mol% of metal excluding lithium in the lithium transition metal composite oxide. The high-nickel positive electrode active material may achieve or provide high capacity and may be applied to high-capacity, high-density rechargeable lithium batteries.

The dry binder as described in one or more embodiments may be used as a binder included in the positive electrode, and other additional binders may be further included. The positive electrode binder may improve or enhance binding properties of positive electrode active material particles with one another and with a current collector. As such additional binders, any suitable binder that is generally available or generally used in the art may be used without limitation. Examples of the additional binders may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polyvinylidene fluoride, polyethylene, polypropylene, a styrene-butadiene rubber, a (meth)acrylated styrene-butadiene rubber, an epoxy resin, a (meth)acrylic resin, a polyester resin, and/or nylon, but embodiments of the present disclosure are not limited thereto.

The conductive (e.g., electrically conductive) material may be included to provide electrode conductivity (e.g., electrical conductivity), and any suitable electrically conductive material may be used as a conductive material unless it causes a chemical change. Examples of the conductive (e.g., electrically conductive) material may include a carbon-based material, such as natural graphite, artificial graphite, carbon black, acetylene black, Ketjen black, a carbon fiber, a carbon nanofiber, a carbon nanotube, and/or the like; a metal-based material of a metal powder and/or a metal fiber including copper, nickel, aluminum, silver, and/or the like; a conductive (e.g., electrically conductive) polymer, such as polyphenylene and/or a polyphenylene derivative; or a mixture thereof.

The current collector may include Al, but embodiments of the present disclosure are not limited thereto.

### Electrolyte

The electrolyte for a rechargeable lithium battery may be, for example, an electrolyte solution, which may include a non-aqueous (e.g., water-insoluble) organic solvent and a lithium salt.

The non-aqueous (e.g., water-insoluble) organic solvent may serve as a medium to transmit ions that take part in the electrochemical reaction of a battery (e.g., a rechargeable lithium battery). The non-aqueous (e.g., water-insoluble) organic solvent may be a carbonate-based solvent, an ester-based solvent, an ether-based solvent, a ketone-based solvent, or an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In one or more embodiments, the ketone-based solvent may include cyclohexanone and/or the like. The alcohol-based solvent may include ethanol, isopropyl alcohol, and/or the like, and the aprotic solvent may include nitriles, such as R-CN (wherein R is a C2 to C20 linear, branched, or cyclic hydrocarbon group, and may include a double bond, an aromatic ring, an ether group, and/or the like); amides, such as dimethylformamide; dioxolanes, such as 1,3-dioxolane, 1,4-dioxolane, and/or the like; sulfolanes; and/or the like.

The non-aqueous (e.g., water-insoluble) organic solvent may be used alone or in combination of two or more, and if (e.g., when) two or more types or kinds are used in combination, a mixing ratio may be appropriately or suitably adjusted depending on the intended battery performance, which is generally understood by those working in the relevant field.

If (e.g., when) using a carbonate-based solvent, a cyclic carbonate and a chain carbonate may be mixed and used, and the cyclic carbonate and the chain carbonate may be mixed in a volume ratio of about 1:1 to about 1:9.

The non-aqueous (e.g., water-insoluble) organic solvent may further include an aromatic hydrocarbon-based organic solvent. For example, the carbonate-based solvent and the aromatic hydrocarbon-based organic solvent may be mixed and used in a volume ratio of about 1:1 to about 30:1.

The electrolyte solution may further include a vinylethyl carbonate compound, a vinylene carbonate compound, and/or an ethylene carbonate compound to improve or enhance battery cycle-life.

Representative examples of the ethylene carbonate compound may include fluoroethylene carbonate, difluoroethylene carbonate, chloroethylene carbonate, dichloroethylene carbonate, bromoethylene carbonate, dibromoethylene carbonate, nitroethylene carbonate, and/or cyanoethylene carbonate.

The lithium salt dissolved in the organic solvent may supply lithium ions in a battery (e.g., a rechargeable lithium battery), enable a basic operation of a rechargeable lithium battery, and improve or enhance transportation of the lithium ions between the positive electrode and the negative electrode. Examples of the lithium salt may include at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₃)₂, Li(FSO₂)₂N (lithium bis(fluorosulfonyl)imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFBOP), and/or lithium bis(oxalato) borate (LiBOB).

A concentration of lithium salt may be within the range of about 0.1 M to about 2.0 M. If (e.g., when) the concentration of lithium salt is within the foregoing range, the electrolyte solution may have appropriate or suitable ionic conductivity and viscosity, and thus excellent or suitable performance may be achieved and lithium ions may move effectively or suitably.

### Separator

Depending on the type or kind of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film, such as a polyethylene/polypropylene two-layer separator, a polyethylene/polypropylene/polyethylene three-layer separator, a polypropylene/polyethylene/polypropylene three-layer separator, and/or the like.

The separator may include a porous substrate and a coating layer including an organic material, an inorganic material, or a combination thereof on one surface or both surfaces (e.g., two opposing surfaces) of the porous substrate.

The porous substrate may be a polymer film of any one polymer selected from among polyolefin, such as polyethylene and/or polypropylene, polyester, such as polyethylene terephthalate and/or polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (PTFE; Teflon^{™}), or a copolymer or mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but embodiments of the present disclosure are not limited thereto. An average particle diameter (D₅₀) of the inorganic particles may be about 1 nm to about 2000 nm, for example, about 100 nm to about 1000 nm or about 100 nm to about 700 nm.

The organic material and the inorganic material may be mixed in one coating layer, or a coating layer including an organic material and a coating layer including an inorganic material may be stacked.

The thickness of the coating layer may be about 0.5 µm to about 20 µm, for example, about 1 µm to about 10 µm or about 1 µm to about 5 µm.

### Method for Manufacturing an Electrode

A method of the invention for manufacturing an electrode includes dry mixing an electrode active material, a binder, and a conductive (e.g., electrically conductive) material to prepare a composition to form or provide an electrode, and coating the composition to form or provide the electrode on an electrode current collector to form or provide an electrode. The binder includes a crosslinking reaction product in which a polyamide-based polymer is crosslinked by an epoxy crosslinking agent, and the epoxy crosslinking agent is a novolac epoxy crosslinking agent. Preferably, the method is a method for manufacturing an electrode of the invention.

The method of providing the electrode may be carried out by a calendaring process. The calendaring process may adjust the roll gap to compress the composition to form or provide the electrode, thereby controlling the density of the electrode and flattening the electrode surface to enhance adhesion with the current collector. In one or more embodiments, the calendaring process may regulate the pore structure inside the electrode, thereby optimizing its electrochemical performance.

### Rechargeable Lithium Battery

The rechargeable lithium battery of the invention may be classified into a cylindrical battery, a prismatic battery, a pouch-shaped battery, a coin-type or kind battery, and/or the like depending on its shape. FIGS. 1 to 4 are schematic views illustrating the rechargeable lithium battery according to one or more embodiments, where FIG. 1 is a cylindrical battery, FIG. 2 is a prismatic battery, and FIGS. 3 and 4 are a pouch-shaped battery.

Referring to FIGS. 1 to 4, a rechargeable lithium battery 100 may include an electrode assembly 40 with a separator 30 between a positive electrode 10 and a negative electrode 20, and a case 50 in which the electrode assembly 40 is built. The positive electrode 10, the negative electrode 20, and the separator 30 may be impregnated with an electrolyte solution. A rechargeable lithium battery 100 may include a sealing member 60 that seals a case 50 referring to FIG. 1.

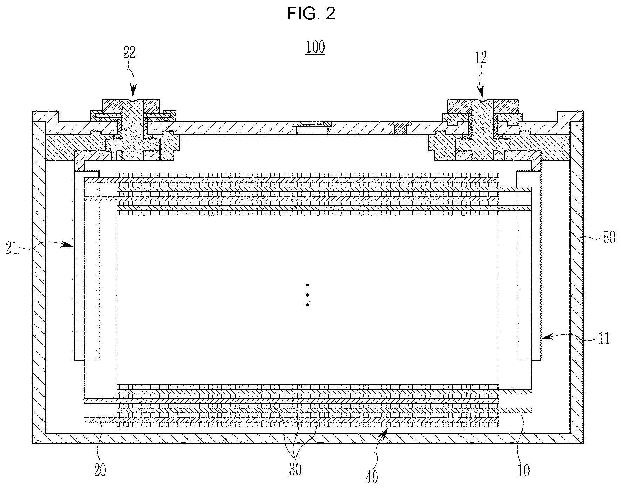

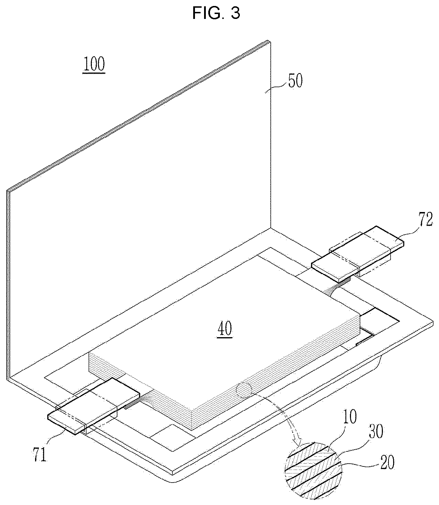

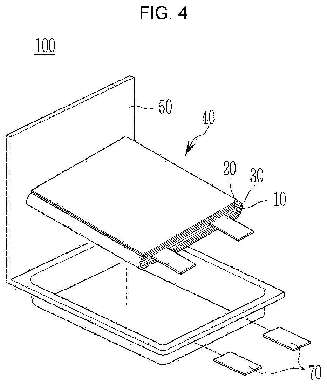

In one or more embodiments, in FIG. 2, the rechargeable lithium battery 100 may include a positive electrode lead tab 11, a positive electrode terminal 12, a negative electrode lead tab 21, and a negative electrode terminal 22. Referring to FIGS. 3 and 4, a rechargeable lithium battery 100 may include an electrode tab 70, for example, a positive electrode tab 71 and a negative electrode tab 72, which serves as electrical paths to conduct current formed or provided in an electrode assembly 40 to the outside.

Examples and Comparative Examples of the present disclosure are described herein. However, the following examples are only examples of the present disclosure, and the present disclosure is not limited to the following examples.

### Example 1

### Example 1-1: Preparation of Dry Binder

Nylon 6 (AM300, Goodfellow Corp.) as a polyamide-based polymer and cresol novolac epoxy (EPICLON N-660, DIC Corp.) as a crosslinking agent were mixed in a weight ratio of 7:3 with a Thinky mixer at 2000 rpm for 3 minutes.

### Example 1-2: Manufacturing of Negative Electrode

After grinding the prepared dry binder, 3 wt% of the dry binder, 95 wt% of artificial graphite as a negative electrode active material, and 2 wt% of carbon black (Super P) as a conductive (e.g., electrically conductive) material were mixed and then, calendared at 1 rpm and 180 °C to manufacture a sheet-shaped negative electrode active material layer. The negative electrode active material layer was compressed to a thickness of about 250 µm and attached onto a copper current collector at 180 °C to form or provide an negative electrode.

### Example 1-3: Manufacturing of Battery Cell

The negative electrode was used with a lithium metal counter electrode and an electrolyte to manufacture a half-cell. The electrolyte was prepared by dissolving 1 M LiPF₆ in a mixed solvent of ethylene carbonate and diethyl carbonate (in a volume ratio of 50: 50).

### Example 2

A dry binder, a negative electrode, and a battery cell were manufactured in substantially the same manner as in Example 1 except that Nylon 610 (Alfa Chemistry) as the polyamide-based polymer and cresol novolac-based epoxy (EPICLON N-660, DIC Corp.) as the crosslinking agent were mixed in a weight ratio of 8:2 to prepare a crosslinked binder, and the thickness of the negative electrode active material layer was changed to 220 µm.

### Example 3

A dry binder, a negative electrode, and a battery cell were manufactured in substantially the same manner as in Example 1 except that nylon 12 (Sigma Aldrich Co. Ltd.) as the polyamide-based polymer and cresol novolac-based epoxy (EPICLON N-660, DIC Corp.) as the crosslinking agent were mixed in a weight ratio of 9:1 to prepare a crosslinked binder, and the thickness of the negative electrode active material layer was changed to 200 µm.

### Example 4

A dry binder, a negative electrode, and a battery cell were manufactured in substantially the same manner as in Example 1 except that nylon 610 (Alfa Chemistry) as the polyamide-based polymer and cresol novolac-based epoxy (EPICLON N-655-EXP-S, DIC Corp.) as the crosslinking agent were mixed in a weight ratio of 8:2 to prepare a crosslinked binder, and the thickness of the negative electrode active material layer was changed to 250 µm.

### Example 5

A dry binder, a negative electrode, and a battery cell were manufactured in substantially the same manner as in Example 1 except that nylon 12 as the polyamide-based polymer and phenol novolac-based epoxy (EPICLON N-770, DIC Corp.) as the crosslinking agent were mixed in a weight ratio of 9:1 to prepare a crosslinked binder, and the thickness of the negative electrode active material layer was changed to 210 µm.

### Example 6

A dry binder, a negative electrode, and a battery cell were manufactured in substantially the same manner as in Example 1 except that nylon 6 (AM300, Goodfellow Corp.) as the polyamide-based polymer and cresol novolac-based epoxy (EPICLON N-655-EXP-S, DIC Corp.) as the crosslinking agent were mixed in a weight ratio of 7:3 to prepare a crosslinked binder, and the thickness of the negative electrode active material layer was changed to 250 µm.

### Example 7

A dry binder, a negative electrode, and a battery cell were manufactured in substantially the same manner as in Example 1 except that nylon 6 (AM300, Goodfellow Corp.) as the polyamide-based polymer and phenol novolac epoxy (EPICLON N-770, DIC Corp.) as the crosslinking agent were mixed in a weight ratio of 8:2 to prepare a crosslinked binder, and the thickness of the negative electrode active material layer was changed to 240 µm.

### Comparative Example 1

A negative electrode and a battery cell were manufactured in substantially the same manner as in Example 1 except that nylon 6 (AM300, Goodfellow Corp.) as a polyamide-based polymer alone was used to prepare a binder, and the thickness of the negative electrode active material layer was changed to 150 µm.

### Comparative Example 2

A negative electrode and a battery cell were manufactured in substantially the same manner as in Example 1 except that a binder including cresol novolac epoxy (EPICLON N-660, DIC Corp.) alone was used.

### Comparative Example 3

A dry binder, a negative electrode, and a battery cell were manufactured in substantially the same manner as in Example 1 except that nylon 610 as the polyamide-based polymer and bis(4-glycidyloxyphenyl)propane (Alfa Chemistry) as the crosslinking agent were mixed in a weight ratio of 7:3 to prepare a crosslinked binder, and the thickness of the negative electrode active material layer was changed to 220 µm.

### Comparative Example 4

A dry binder, a negative electrode, and a battery cell were manufactured in substantially the same manner as in Example 1 except that nylon 610 as the polyamide-based polymer and ethylene glycol diglycidyl ether (TCI) as the crosslinking agent were mixed in a weight ratio of 7:3 to prepare the crosslinked binder, and the thickness of the negative electrode active material layer was changed to 200 µm.

### Comparative Example 5-1

A negative electrode and a battery cell were manufactured in substantially the same manner as in Example 1 except that a PTFE binder (DF681F, Syensqo) was included.

### Comparative Example 5-2

A negative electrode and a battery cell were manufactured in substantially the same manner as in Comparative Example 5-1 except that the negative electrode active material layer was compressed onto a copper current collector to which an adhesive primer layer including a PVDF binder and carbon black (Super-P) of a conductive (e.g., electrically conductive) material was added.

### Evaluation Example 1: Tensile Strength and Adhesive Strength

The sheet-shaped negative electrode active material layers according to Examples 1 to 7 and Comparative Examples 1 to 5-1 were measured with respect to tensile strength by a UTM tensile strength tester, and the results are shown in Table 1.

### Evaluation criteria

If the tensile strength was greater than 1.5 N, ⊚ was given, if the tensile strength was in a range of greater than 1.0 N and less than or equal to 1.5 N, o was given, and if the tensile strength was 1.0 N or lower, X was given.

Subsequently, the negative electrodes according to Examples 1 to 7 and Comparative Examples 1 to 5-1 were respectively measured with respect to adhesive strength between current collector and negative electrode active material layer by using the UTM tensile strength tester. Herein, each sample was prepared by attaching a slide glass to one side of a double-sided adhesive tape and then, attaching each of the negative electrodes to the other side of the double-sided adhesive tape. The sample was mounted on the UTM tensile strength tester to measure adhesive strength by peeling the negative electrode from the slide glass to a peeling angle of 180°, and the results are shown in Table 1.

### Evaluation criteria

If the adhesive strength was 0.8 gf/mm or less, X was given, if the adhesive strength was greater than 0.8 gf/mm and less than or equal to 1.0 gf/mm, o was given, and if the adhesive strength was greater than 1.0 gf/mm, ⊚ was given.

**Table 1**

| | Mechanical characteristics | |
|---|---|---|
| | Tensile strength | Adhesive strength |
| Example 1 | ⊚ | ⊚ |
| Example 2 | ⊚ | ⊚ |
| Example 3 | ⊚ | ⊚ |
| Example 4 | ⊚ | ⊚ |
| Example 5 | ⊚ | ⊚ |
| Example 6 | ⊚ | ⊚ |
| Example 7 | ⊚ | ⊚ |
| Comparative Example 1 | ○ | ○ |
| Comparative Example 2 | - | - |
| Comparative Example 3 | ○ | ○ |
| Comparative Example 4 | ○ | ○ |
| Comparative Example 5-1 | ⊚ | X |

Referring to Table 1, Comparative Example 1, which used a binder including the polyamide-based polymer alone without the novolac epoxy crosslinking agent, exhibited deteriorated tensile strength. In Comparative Example 2, which used the novolac epoxy crosslinking agent alone as a binder, tensile strength and adhesive strength were impossible to measure, because flexibility of the electrode plate decreased to cause cracks and make it difficult to form an electrode itself. Comparative Example 3 using bis(4-glycidyloxyphenyl)propane, a bisphenol A epoxy compound, as the crosslinking agent and Comparative Example 4 using glycol diglycidyl ether, an aliphatic epoxy compound, as the crosslinking agent exhibited deteriorated tensile characteristics and adhesive strength, compared with Examples 1 to 5, because these crosslinking agents were present as a liquid material and thus aggregated, when mixed with the polyamide-based polymer in a dry powder state, resulting in not being evenly dispersed therein. Comparative Example 5-1 used a PTFE binder and thus exhibited very inferior adhesive strength.

On the contrary, Examples 1 to 7, which used a mixed binder of the polyamide-based polymer and the novolac epoxy crosslinking agent, wherein the novolac epoxy crosslinking agent, which has a higher melting point than the crosslinking agent of Comparative Examples 3 and 4 and thus existed as a solid phase at room temperature, was evenly dispersed, resultantly improving or enhancing tensile strength and adhesive strength, compared with Comparative Examples 1 to 5-1.

### Evaluation Example 2: Electrolyte Solution Stability

Electrolyte stability was measured by dipping the negative electrodes of Examples 1 to 7 and Comparative Examples 1, 3, 4, and 5-2 in an electrolyte solution to examine whether peeling-off occurred or not after 3 days at 60 °C, and the results are shown in Table 2.

### Evaluation criteria

The electrolyte solution stability was evaluated by giving X to the peeling-off, which was used as criteria. Even if the peeling-off was not observed, but if pushed by hand after the evaluation, o was given. If neither peeling-off nor pushed, ⊚ was given.

**Table 2**

| | Electrolyte solution stability |
|---|---|
| Example 1 | ⊚ |
| Example 2 | ⊚ |
| Example 3 | ⊚ |
| Example 4 | ⊚ |
| Example 5 | ⊚ |
| Example 6 | ⊚ |
| Example 7 | ⊚ |
| Comparative Example 1 | X |
| Comparative Example 3 | ○ |
| Comparative Example 4 | ○ |
| Comparative Example 5-2 | ○ |

Referring to Table 2, in Comparative Example 1 using the polyamide-based polymer alone as a binder, the polyamide-based polymer well absorbed moisture to easily deteriorate the electrolyte solution, resulting in deteriorating electrolyte solution stability. In Comparative Examples 3 and 4, the powder was not evenly dispersed but aggregated during the mixing process. Accordingly, as a crosslinking structure was not uniformly formed or provided, the electrolyte solution stability also was deteriorated. Comparative Example 5-1 had insufficient adhesive strength, about which the electrolyte solution stability test was impossible to conduct. Comparative Example 5-2, in which the negative electrode active material layer was compressed onto the current collector including the adhesive primer layer, exhibited deteriorated electrolyte solution stability.

On the contrary, Examples 1 to 7 exhibited excellent or suitable electrolyte solution stability. Because the electrolyte solution stability confirmed excellent or suitable durability of the negative electrodes, the excellent or suitable electrolyte solution stability is also expected to secure or provide excellent or suitable battery cycle-life maintenance rate.

### Evaluation Example 3: Current Density and Initial Charge/Discharge Efficiency

In order to measure current density, the half-cells of Examples 1 to 7 and Comparative Examples 1 to 5-2 were constant current-charged to a voltage of 4.25 V at a current rate of 0.5 C and cut off in the constant voltage mode of 4.25 V at a current rate of 0.02 C. Subsequently, the cells were constant current-discharged to a voltage of 2.8 V at a current rate of 0.5 C.

### Evaluation criteria

If the current density was 4 mA/cm² or less, X was given, if greater than 4 mA/cm² and less than or equal to 5 mA/cm², o was given, and if greater than 5 mA/cm², ⊚ was given.

The half-cells of Examples 1 to 7 and Comparative Examples 1, 3, 4, and 5-2 were once charged and discharged to measure a ratio of discharge capacity/charge capacity (1^{st} discharge capacity/1^{st} charge capacity), and the results are shown as initial charge/discharge efficiency in Table 3.

### Evaluation criteria

If the initial charge/discharge efficiency was 90% or higher,⊚ was given, if the initial charge/discharge efficiency was greater than or equal to 87% and lower than 90%, o was given, if the initial charge/discharge efficiency was greater than or equal to 84% and lower than 87%, Δ was given, and if it was lower than 84%, X was given.

**Table 3**

| | Current density | Initial charge/discharge efficiency |
|---|---|---|
| Example 1 | ⊚ | ⊚ |
| Example 2 | ⊚ | ⊚ |
| Example 3 | ○ | ⊚ |
| Example 4 | ○ | ⊚ |
| Example 5 | ⊚ | ⊚ |
| Example 6 | ⊚ | ⊚ |
| Example 7 | ⊚ | ⊚ |
| Comparative Example 1 | X | ⊚ |
| Comparative Example 3 | X | ○ |
| Comparative Example 4 | X | ○ |
| Comparative Example 5-2 | ⊚ | X |

Referring to Table 3, the half-cells of Examples 1 to 7, in which the negative electrode had relatively high permittivity, exhibited high current density and initial charge/discharge efficiency.

On the contrary, the half-cells of Comparative Example 1 exhibited low current density, and the half-cells of Comparative Examples 3 and 4, in which the crosslinking agent in the liquid state was not even dispersed but aggregated and thus caused resistance (e.g., electrical resistance), exhibited low current density and initial charge/discharge efficiency. The half-cells of Comparative Example 5-2 was confirmed to exhibit low initial charge/discharge efficiency due to low reduction stability of the negative electrode.

**Reference Numerals**

| | | | |
|---|---|---|---|
| 100: | rechargeable lithium battery | 10: | positive electrode |
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |

## Claims

1. A dry binder, comprising:
a crosslinking reaction product in which a polyamide-based polymer is crosslinked by an epoxy crosslinking agent,
wherein the epoxy crosslinking agent is a novolac epoxy crosslinking agent.

2. The dry binder as claimed in claim 1, wherein:
the polyamide-based polymer is included in an amount of 60 parts by weight to 95 parts by weight based on 100 parts by weight of the dry binder.

3. The dry binder as claimed in claim 1 or 2, wherein:
the novolac epoxy crosslinking agent is included in an amount of 5 parts by weight to 40 parts by weight based on 100 parts by weight of the dry binder.

4. The dry binder as claimed in any of claims 1-3, wherein:
the polyamide-based polymer comprises a structural unit represented by any one selected from Chemical Formula 1-1 and Chemical Formula 1-2: 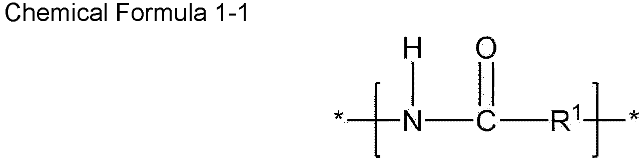 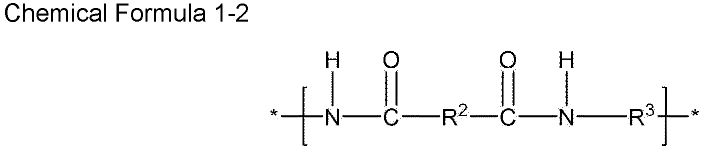 wherein, in Chemical Formulas 1-1 and 1-2,
R¹, R², and R³ are each independently a linking group that is a substituted or unsubstituted C2 to C20 alkylene group, a substituted or unsubstituted C3 to C20 cycloalkylene group, or a combination thereof, and * indicates a linking site with a main chain of the polyamide-based polymer.

5. The dry binder as claimed in claim 4, wherein:
the substituted or unsubstituted C2 to C20 alkylene group comprises a structural unit of -(CH₂)ₙ-, n being an integer of 2 to 14; and/or
at least one non-adjacent methylene group (-(CH₂)-) selected from among the linking groups is replaced with -NH-, -C(=O)-, or a combination thereof.

6. The dry binder as claimed in any of claims 1-5, wherein:
the novolac epoxy crosslinking agent comprises a structure of Chemical Formula 2: 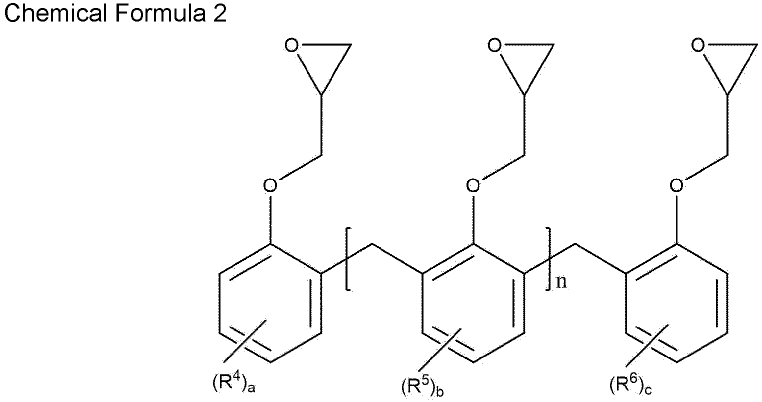 wherein, in Chemical Formula 2,
R⁴, R⁵, and R⁶ are the same or different and are each independently hydrogen (H) or a substituted or unsubstituted C1 to C6 alkyl group, n is 1 to 30, and a and c are each independently an integer of 0 to 4 and b is an integer of 0 to 3.

7. The dry binder as claimed in any of claims 1-6, wherein:
a weight average molecular weight (*M*_{w}) of the polyamide-based polymer is 600 g/mol to 800,000 g/mol.

8. The dry binder as claimed in any of claims 1-7, wherein:
a weight average molecular weight (*M*_{w}) of the novolac epoxy crosslinking agent is 500 g/mol to 10,000 g/mol.

9. An electrode for a rechargeable lithium battery, comprising:
the dry binder as claimed in any of claims 1-8; and
an electrode active material.

10. The electrode as claimed in claim 9, wherein:
the dry binder is used in an amount of 0.5 parts by weight to 20 parts by weight based on 100 parts by weight of the electrode active material.

11. The electrode as claimed in claim 9 or 10, wherein:
the electrode is a negative electrode, preferably wherein the negative electrode comprises a negative electrode active material comprising a carbon-based negative electrode active material, a silicon-based negative electrode active material, a Sn-based negative electrode active material, or a combination thereof.

12. The electrode as claimed in claim 9, wherein:
the electrode is a positive electrode.

13. A rechargeable lithium battery, comprising:
a positive electrode; a negative electrode; and an electrolyte,
wherein at least one selected from the negative electrode and the positive electrode comprises the dry binder as claimed in any of claims 1-8.

14. A method for manufacturing an electrode, preferably for manufacturing an electrode as claimed in any of claims 9-12, the method comprising:
mixing an electrode active material, a binder, and a conductive material in a dry manner to prepare a composition to provide an electrode, and
coating the composition on an electrode current collector to provide the electrode,
wherein the binder comprises a crosslinking reaction product in which a polyamide-based polymer is crosslinked by an epoxy crosslinking agent, and
the epoxy crosslinking agent is a novolac epoxy crosslinking agent.

15. The method as claimed in claim 14, wherein:
the electrode is provided by a calendaring process.
